# EUROPEAN PATENT APPLICATION

(11) **EP 4 144 281 A1**
(43) Date of publication of application: **08.03.2023**
(21) Application number: 21797380.9
(22) Date of filing: 22.04.2021
(51) Int. Cl.: A47L 15/46, C02F 1/42

(54) **DISHWASHER CONTROL METHOD AND CONTROL APPARATUS**

(30) Priority: 30.04.2020 CN 202010363841
(71) Applicant: Sanhua Aweco Appliance Systems (Wuhu) Co., Ltd., Wuhu, Anhui 241003 (CN)
(72) Inventor: HUANG, Longzhong, Wuhu, Anhui 241003 (CN); XU, Wei, Wuhu, Anhui 241003 (CN); ZHOU, Jing, Wuhu, Anhui 241003 (CN); HUANG, Hai, Wuhu, Anhui 241003 (CN); XU, Weidong, Wuhu, Anhui 241003 (CN); HUANG, Ningjie, Wuhu, Anhui 241003 (CN)
(74) Representative: Epping - Hermann - Fischer
(86) International application number: PCT/CN2021/088879
(87) International publication number: WO 2021/218758

(57) **Abstract**

A dishwasher control method and control apparatus, a single-time dishwashing process of the dishwasher comprising at least one working phase, each working phase comprising a water intake phase and a washing phase, and the dishwasher control method comprising: acquiring a hardness value of water produced by a water softening apparatus running a softening function at the end stage of the water intake phase of the current working phase (S 101); if the hardness value is less than a preset first hardness threshold, then determining that the water softening apparatus can produce enough water that meets the hardness requirements of the next working phase requiring soft water washing; and, after the water intake phase of the current working phase is finished, controlling the water softening apparatus to only run the softening function again at the next working phase requiring soft water washing (S103). Thus, the softening function of the water softening apparatus can be used effectively, reducing the regeneration frequency of the water softening apparatus and reducing the waste of water resources.

## Description

This application claims priority to Chinese Patent Application No. 202010363841.4, titled "METHOD AND APPARATUS FOR CONTROLLING DISHWASHER", filed on April 30, 2020 with the China National Intellectual Property Administration, which is incorporated herein by reference in its entirety.

### FIELD

The present disclosure relates to the field of household electrical appliances, and in particular, to a method and an apparatus for controlling a dishwasher.

### BACKGROUND

In conventional technology, a dishwasher uses a water softener for water processing, so as to eliminate metal cations in water, such as calcium ions and magnesium ions. Thereby, less lime scale is generated from the washing water, which improves user's dishwashing experience. In order to restore a softening capability, some water softeners need to regenerate after operating for a certain period or for a certain quantity of times.

The softening capability of the water softener would be affected by factors such as temperature, flow rate, and quality of the water. Sometimes the water softener is still capable to perform softening when the regeneration starts, which hinders rational utilization of the softening capability. Consequently, the regeneration is activated more frequently, and hence aggravates a waste of water resources.

### SUMMARY

A method for controlling a dishwasher is provided according to an embodiment of the present disclosure. A single washing cycle of the dishwasher includes at least one operation stage, and each operation stage includes a water-injection phase and a washing phase. The method includes: acquiring hardness of water, which is generated by a water softener performing softening during an end period of the water-injection phase of a current operation stage; and in response to the hardness being less than a preset first threshold hardness, determining that the water softener is capable of generating water of which both hardness and a volume meet a requirement of a next operation stage requiring softened water, controlling the water softener to not perform the softening after the water-injection phase of the current operation stage until the next operation stage requiring softened water, and controlling the water softener to perform the softening in the next operation stage requiring softened water.

An apparatus for controlling a dishwasher is further provided according to an embodiment of the present disclosure. A single washing cycle of the dishwasher includes at least one operation stage, and each operation stage includes a water-injection phase and a washing phase. The apparatus includes: a hardness acquisition module configured to acquire hardness of water, which is generated by a water softener performing softening during an end period of the water-injection phase of a current operation stage; a softening-capability determination module configured to, determine that the water softener is capable of generating water of which both hardness and a volume meet a requirement of a next operation stage requiring softened water, in response to the hardness being less than a preset first threshold hardness; and a softening control module, configured to control the water softener to not perform the softening after the water-injection phase of the current operation stage until the next operation stage requiring softened water, and control the water softener to perform the softening in the next operation stage requiring softened water.

### BRIEF DESCRIPTION OF THE DRAWINGS

Figure 1 is a schematic structural diagram of a water softener according to an embodiment of the present disclosure.
Figure 2 is a cross-sectional view of a water softener as shown in Figure 1.
Figure 3 is a flow chart of a method for controlling a dishwasher according to an embodiment of the present disclosure.
Figure 4 is a flowchart of a method for controlling a dishwasher according to another embodiment of the present disclosure.
Figure 5 is a flowchart of a method for controlling a dishwasher according to another embodiment of the present disclosure.
Figure 6 is a flowchart of a method for controlling a dishwasher according to another embodiment of the present disclosure.
Figure 7 is a flowchart of a method for controlling a dishwasher according to another embodiment of the present disclosure.
Figure 8 is a schematic structural diagram of an apparatus for controlling a dishwasher according to an embodiment of the present disclosure.

### DETAILED DESCRIPTION

Embodiments are described in detail herein, and examples thereof are shown in the drawings. Unless indicated otherwise, identical reference numerals in different drawings represent the same or similar elements when following description makes references to the drawings. Implementations described in following embodiments do not represent all implementations that are consistent with the present disclosure. Rather, they are merely examples of apparatuses and methods that are consistent with what is described in detail in the appended claims and in some aspects of the present disclosure.

The terminology used in this specification is for the purpose of describing particular embodiments only and is not intended to limit the present disclosure. Unless clearly indicated otherwise in the context, singular forms such as "a", "the", and "such" in this specification and the appended claims are intended to include plural forms as well.

"First", "second", and similar terms used in the description and claims of the present disclosure do not indicate any order, quantity, or degree of importance, and are only configured to distinguish different components. Likewise, the terms such as "a(n)" or "one" do not indicate a quantitative limitation, but rather indicate presence of at least one. Similarly, terms such as "multiple" indicates a quantity of two or more. Hereinafter embodiments of the present disclosure are described in detail in conjunction with the drawings. Features in following embodiments and implementations may be mutually complementary and may be combined when there is no conflict.

A method for controlling a dishwasher according to embodiments of the present disclosure is applicable to a dishwasher having a capacitive-deionization water softener. The water softener may include a first electrode and a second electrode having opposite polarities. The water softener performs softening or regeneration through swapping the polarities connected to the first electrode and the second electrode. The dishwasher is provided with a controller, such as a controlling circuit board. The controller is electrically coupled to the water softener, a washing apparatus, and other operation components, and is configured to control these apparatuses or components. The method for controlling the dishwasher according to embodiments of the present disclosure is also applicable to a dishwasher having a water softener of another type, such as a water softener of an ion-exchange resin type. The ion-exchange-resin water softener may soften the water by utilizing a cation-exchange resin, which exchanges certain cations (such as calcium ions and magnesium ions) in water with its hydrogen ions. When the water softener regenerates, dishwashing salt in a salt tank of the water softener is dissolved into water, and the obtained brine rinses the ion-exchange resin repeatedly. Thereby, the calcium cations and magnesium cations in the ion-exchange resin, restoring the softening capability. An operation principle and a structure of the ion-exchange-resin water softener may refer to conventional technology, and is not described in detail herein.

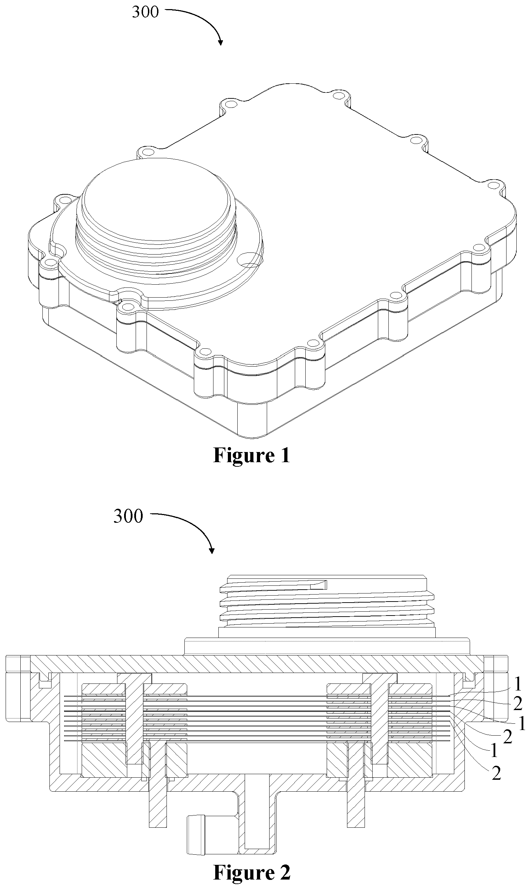

Reference is made to Figure 1 and Figure 2. In some embodiments, the capacitive-deionization water softener 300 includes multiple first electrode sheets 1 and multiple second electrode sheets 2. The first electrode sheets 1 and the second electrode sheets 2 are stacked in an interleaved manner, and a channel through which water is capable to flow is formed between each pair of the first electrode sheet 1 and the second electrode sheet 2 that are adjacent. Specifically, the channel may be implemented by filling an insulating filter or the like between the first electrode sheet 1 and the second electrode sheet 2. The insulating filter may be made of a material having a mesh structure. After the first electrode sheets 1 and the second electrode sheets 2 are fixed under a certain pressure, the insulating filter is filled between the first electrode sheet 1 and the second electrode sheet 2 that are adjacent. Thereby, the channel through which water is capable to flow is formed between the first electrode sheet 1 and the second electrode sheet 2.

The first electrode sheets 1 and the second electrode sheets 2 may be thin graphite electrode sheets, or made of another conductive material. The first electrode sheets 1 and the second electrode sheets 2 are connected to positive and negative terminals of a power source, so that an electric field can be formed among the first electrode sheets 1 and the second electrode sheets 2.

The first electrode sheet 1 is provided with a first adsorption layer (not shown) for adsorbing target cations (such as calcium ions and magnesium ions in water). The second electrode sheet 2 is provided with a second adsorption layer (not shown) for adsorbing target anions.

When the water softener 300 is powered, the first electrode sheets 1 are connected to a negative terminal of a direct-current (DC) power source, and the second electrode sheets 2 are connected to a positive terminal of the DC power source. Thereby, when water flows among the first electrode sheets 1 and the second electrode sheets 2, cations in the water are adsorbed onto the first adsorption layer, and anions in the water are adsorbed onto the second adsorption layer, and hence the water is softened.

After the adsorption capacities of the first adsorption layer and the second adsorption layer are saturated, the first electrode sheets 1 and the second electrode sheets 2 may swap their connections to the terminals of the power source. That is, the first electrode sheets 1 are connected to the positive terminal of the DC power source, and the second electrode sheets 2 are connected to the negative terminal of the DC power source. In such case, the first adsorption layer releases the cations adsorbed on it under the electric field. Few cations are adsorbed by the second adsorption layer because the second adsorption has a poor capability of adsorbing the cations. Therefore, the cations return to the water, and the adsorption capability of the first adsorption layer is restored. Similarly, the second adsorption layer releases the anions adsorbed on it under the electric field, and the adsorption capability of the second adsorption layer is restored. Thereby, regeneration is implemented.

In some embodiments, a forward voltage applied between the first electrode and the second electrode refers to that the first electrode sheets 1 are connected to the negative terminal of the DC power source while and the second electrode sheets 2 are connected to the positive terminal of the DC power source. Correspondingly, a backward voltage applied between the first electrode and the second electrode refers to that the first electrodes 1 are connected to the positive terminal of the DC power source and the second electrodes 2 are connected to the negative terminal of the DC power source.

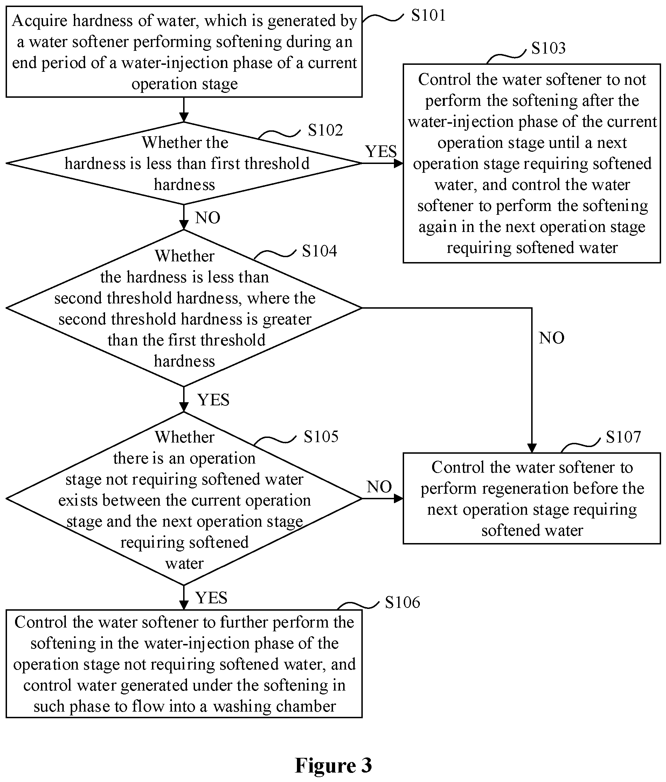

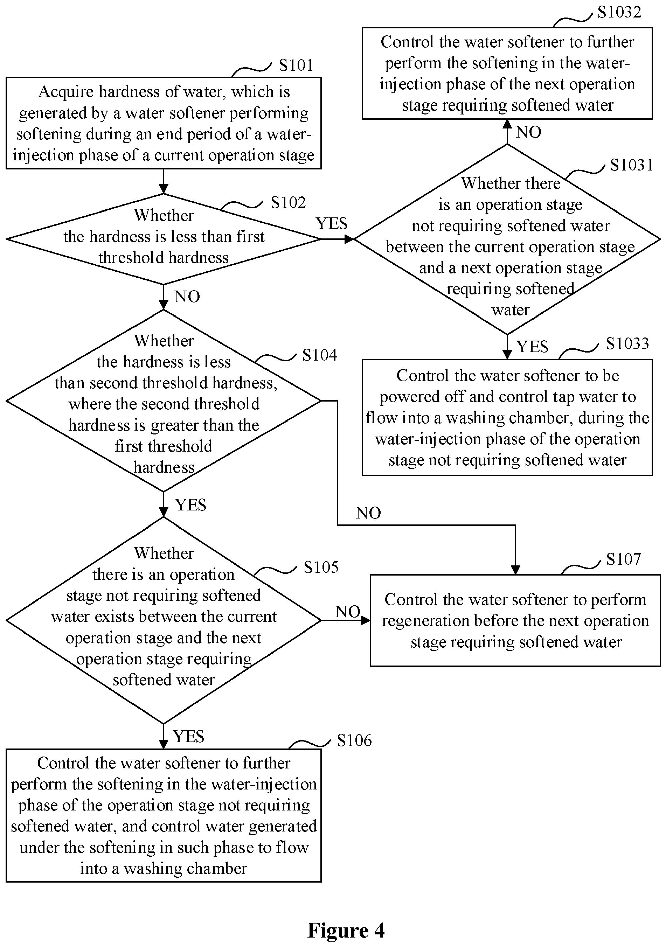

Reference is made to Figure 3, in conjunction with Figure 4 to Figure 7 when necessary. The method for controlling a dishwasher according to an embodiment of the present disclosure may include steps S 101 to S103.

In step S 101, hardness of water is acquired, where the water is generated by the water softener performing softening during an end period of a water-injection phase of a first operation stage. The first operation stage refers to a current operation stage.

In step S103, in a case that the hardness is less than preset first threshold hardness, the water softener is controlled to not perform the softening after the water-injection phase of the first operation stage and before ae second operation stage, and perform the softening again in the second operation stage. The second operation stage and the first operation stage may belong to a same washing cycle. The second operation stage is a next operation stage that requires softened water after the first operation stage. For example, in a certain washing cycle, the second operation stage may be immediately after the first operation stage, or there may be another operation stage between the first operation stage and the second operation stage. Alternatively, the second operation stage and the first operation stage may belong to different washing cycles. For example, the first operation stage is an operation stage of the first fully washing cycle, and the second operation stage is an operation stage of the second full washing cycle.

It may be preset in a program of the dishwasher, or selected by a user based on an actual situation, whether softened water is required in a certain operation stage. In some embodiments, an operation stage requiring water heating may be determined as the operation stage requiring softened water. Washing with heated water is more apt to convert metal cations into insoluble substances such as calcium carbonate, magnesium hydroxide, or the like, than washing with unheated water, and hence is more apt to generate lime scale. In an embodiment, a washing phase of the second operation stage requires water heating. In a case that the hardness is less than the first threshold hardness that is preset, it is determined that the water softener is capable to further generate water which meets a requirement of the second operation stage on hardness and volume of water in the washing chamber.

A single washing cycle of the dishwasher includes at least one operation stage, and each operation stage includes a water-injection phase and a washing phase. Specifically, the operation stage of the dishwasher may include prewash, wash, rinse, or a combination thereof. Correspondingly, the prewash includes a prewash water-injection phase and a prewash washing phase, the wash includes a wash water-injection phase and a wash washing phase, and the rinse includes a rinse water-injection phase and a rinse washing phase.

A full cycle of washing dishes includes only the wash stage in some dishwashers, includes the wash stage and then the rinse stage in some dishwashers, while includes the prewash stage, then the wash stage, and then the rinse stage in some dishwashers. A dishwasher having two or more of the prewash, the wash, and the rinse may provide multiple washing modes. For example, a dishwasher having the prewash and the wash may be controlled to operate under multiple selectable washing modes. The full washing cycle may include only the wash in one mode, include the wash and the rinse in another mode, and include the prewash, the wash, and the rinse in a third mode.

Heated water or unheated water may be used in each washing phase. A detergent may or may not be used in each washing phase of the dishwasher. For example, the rinse may include a warm-rinse, in which dishes are washed with heated water, or a cold-rinse, in which dishes are washed with unheated water (such as tap water). In an operation stage requiring water heating, the water is generally heated during the washing phase.

In some embodiments, it is taken as an example that the operation stages in a washing cycle of the dishwasher includes the wash and the rinse. In the wash, heated water added with a detergent is used to wash dishes. The rinse refers to the warm-rinse in which heated water is used to wash dishes. In some scenarios, a brightener or a rinse agent may be applied for washing the dishes in the rinse. Correspondingly, the wash is the first operation stage and the warm-rinse is the second operation stage. The first operation stage and the second operation stage belong to a same washing cycle. In another embodiment, there is a third operation stage requiring no water heating between the first operation stage and the second operation stage. That is, there is an operation stage requiring no water heating between the wash and the warm-rinse. For example, tap water is directly used to wash dishes in the other operation stage.

In embodiments of the present application, the end period of the water-injection phase of the first operation stage may refer to a period from a moment near the end of the water-injection phase of the first operation stage to the last moment of the water-injection phase. As an example, the end period of the water-injection phase of the first operation stage is the latest one fifth of the water-injection phase of the first operation stage. As another example, the end period of the water-injection phase of the first operation stage may is the latest one tenth of the water-injection phase of the first operation stage. As another example, the end period of the water-injection phase of the first operation stage may be the latest one twentieth of the water-injection phase of the first operation stage. The end period section of the water-injection phase may be configured based on a specific situation, which is not limited herein.

In some embodiments, the step S101 may include following steps S1011 and S1012.

In step S1011, total dissolved solids in water, which is at a water outlet of the water softener during the end period of the water-injection phase of the first operation stage, is detected.

In step S 1012, hardness corresponding to the detected total soluble solids is calculated based on a conversion relationship between the total dissolved solids and the hardness.

A component may be provided at the water outlet of the water softener to detect total dissolved solids in the water at the water outlet during the end period of the water-injection phase of the first operation stage. For example, the component for detecting the total dissolved solids may be configured to detect real-time total dissolved solids in the water generated by the water softener performing softening. The end period of the water-injection phase is preset in the dishwasher, and the component for detecting the total dissolved solids or a controller of the dishwasher may acquire a measurement of the total dissolved solids, which is detected in real time during such period. In a case that multiple measurements of the total dissolved solids are acquired, a maximum among the multiple measurements may be determined as the total dissolved solids in the water at the water outlet of the water softener during such period. Alternatively, an average of the multiple measurements may be determined as the total dissolved solids in the water at the water outlet of the water softener during such period.

Alternatively, the end period of the water-injection phase is preset in the dishwasher, and the component for detecting the total dissolved solids may be configured to detect the total dissolved solids in the water generated by the water softener performing softening directly during such period. A means of acquiring the total dissolved solids is not limited herein, and may be set based on a specific application scenario.

In another embodiment, the step S101 may include following steps S1013 to S1014.

In step S1013, electrical conductivity of water, which is at the water outlet of the water softener during the end period of the water-injection phase of the first operation stage, is detected.

In step S1014, the hardness corresponding to the detected electrical conductivity is calculated based on a conversion relationship between the electrical conductivity and the hardness.

A conductivity meter may be installed at the water outlet of the water softener, so as to detect the electrical conductivity of the water at the water outlet of the water softener during the end period of the water-injection phase. For example, the conductivity meter may be configured to detect real-time electrical conductivity of water generated by the water softener performing softening. The end period of the water-injection phase is preset in the dishwasher, and the conductivity meter or a controller of the dishwasher may acquire the electrical conductivity which is detected in real time during such period. In a case that multiple measurements of the electrical conductivity are acquired, a maximum among the multiple measurements may be determined as the electrical conductivity of the water at the water outlet of the water softener during such period. Alternatively, an average of the multiple measurements may be determined as the electrical conductivity of the water at the water outlet of the water softener during such period.

Similarly, the end period of the water-injection phase is preset in the dishwasher, and the conductivity meter may be configured to detect the electrical conductivity of the water generated by the water softener performing softening directly during such period. A means of acquiring the electrical conductivity is not limited herein, and may be set based on a specific application scenario.

After the water-injection phase of the first operation stage ends, the water softener may be controlled to stop the softening, and the softening would restart on requirement in subsequent stages or phases. Correspondingly, the water softener may be switched out of a softening mode or may be powered off to stop the softening.

In an embodiment, the method may include step S102 before the step S103. In step S102, it is determined whether the hardness acquired in the step S101 is less than first threshold hardness.

The process proceeds to the step S103 in a case that the determination in the step S102 is positive.

The hardness of the water generated by the water softener performing the softening during the end period of the water-injection phase being less than the preset first threshold hardness may indicated that the water softener is capable to perform further softening to generate water qualified for the second operation stage. That is, the water softener is capable to perform further softening to generate water of which both hardness and a volume meets a requirement of the second operation stage.

In an embodiment, the first threshold hardness ranges from 2dh to 8dh. That is, the first threshold hardness may be set to any hardness ranging from 2dh to 8dh. A specific value of the first threshold hardness may be set based on factors such as a specific requirement of the dishwasher, which is not limited herein. In some embodiments, the hardness of water mentioned herein complies with water hardness standards in Germany.

Reference is made to Figure 4. In an embodiment, the process proceeds to the step S103 in a case that the determination in the step S102 is positive. The step S103 may specifically include steps S1031 to S1033.

In step S1031, it is determined whether there is a third operation stage not requiring softened water between the first operation stage and the second operation stage. Specifically, it may be determined whether there is a third operation stage not requiring water heating between the first operation stage and the second operation stage.

The process proceeds to step S1032 in a case that the determination in the step S1031 is negative. Otherwise, the process proceeds to step S1033.

In step S1032, the water softener is controlled to further perform the softening in the water-injection phase of the second operation stage.

In step S1033, the water softener is powered off and tap water is supplied into the washing chamber, during the water-injection phase of the third operation stage.

In other words, in a case that there is no operation stage requiring water heating between the first operation stage and the second operation stage, the water softener of the dishwasher is controlled to perform the softening again in the water-injection phase of the second operation stage, and water generated by the water softener performing the softening is supplied into the washing chamber, so as to provide washing water the second operation stage.

In a case that there is at least a third operation stage not requiring water heating between the first operation stage and the second operation stage, the water softener is powered off and tap water is supplied into the washing chamber during the water-injection phase of the third operation stage, so as to provide washing water for the third operation stage. The tap water may be supplied into the washing chamber directly via a pipe connecting between a tap valve and the washing chamber. Alternatively, the tap water first flows into the water softener which has been powered off, and then flows into the washing chamber from the water softener. The water softener which is powered off provides a flowing channel for the tap water, and the tap water is softened or hardened when flowing through such channel.

After the third operation stage, the water softener of the dishwasher is controlled to perform the softening again in the water-injection phase of the second operation stage. In such phase, water generated by the water softener performing the softening is controlled to flow into the washing chamber, so as to provide washing water for the second operation stage.

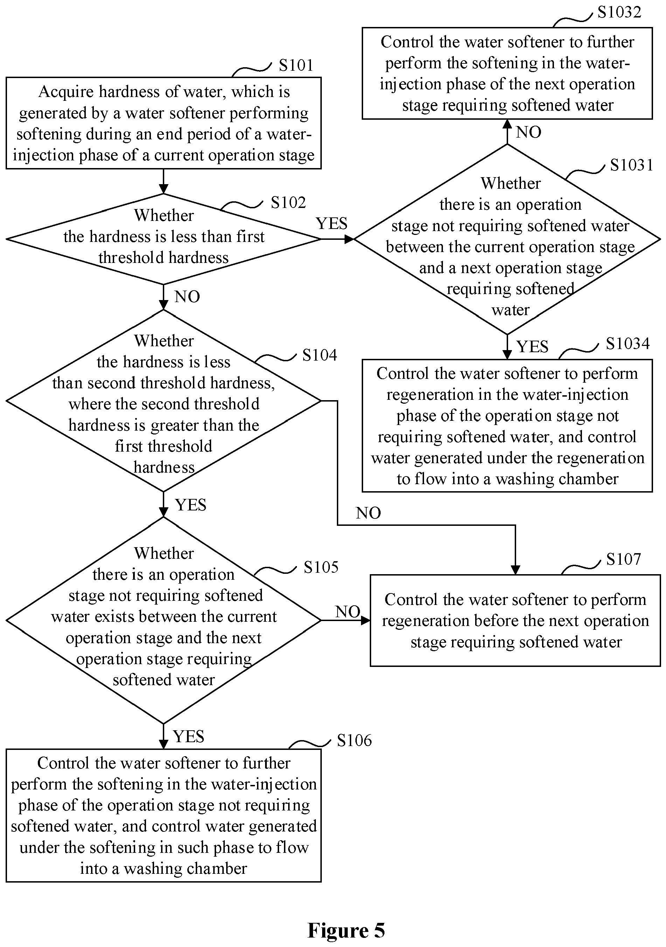

Reference is made to Figure 5. In other embodiments, the step S103, to which the process proceeds in a case the determination in the step S102 is positive, may specifically include steps S1031, S1032, and S1034. The process proceeds to step S1032 in a case that the determination in the step S1031 is negative, and otherwise proceeds to step S1034.

Details of the step S1031 and the step S1032 may refer to the foregoing description.

In step S1034, the water softener is controlled to perform regeneration and water generated under the regeneration flows into the washing chamber.

The detected hardness of the water generated by the water softener performing the softening during the end period of the water-injection phase of the first operation stage may be less than the first threshold hardness, and then there may be at least a third operation stage, which does not require softened water, between the first operation stage and the second operation stage. For example, it is determined that there is at least one operation stage not requiring water heating between the first operation stage and the second operation stage. In the above case, the water softener may be controlled to perform regeneration during the water-injection phase of the third operation stage. In such phase, water generated under the regeneration may flow into the washing chamber, such that the hard water generated by the regenerating water softener can be utilized in the washing phase not requiring softened water, reducing a waste of water resources.

In another embodiment, in a case that the determination in the step S1031 is positive, the water generated by the water softener performing the regeneration may be controlled to be drained through a drain pipe of the dishwasher, and tap water is controlled to flow into the washing chamber to provide washing water for the third operation stage. How to provide washing water for the third operation stage is not limited herein, and may be set according to a specific application scenario.

In an embodiment, a water outlet of the water softener and the washing chamber may communicate via a pipe. For example, valves may be provided at a water inlet of the washing chamber, or may be provided in the pipe, or may be provided at the water outlet of the water softener. Thereby, the pipe connecting the water outlet of the water softener and the washing chamber may be unblocked or blocked by opening or closing the valve. That is, the water generated by the water softener performing the softening is allowed to flow into the washing chamber of the dishwasher, through controlling the valve to unblock the pipe connecting the water outlet of the water softener and the washing chamber and block a pipe connecting the water outlet of the water softener and a drain pipe. Water generated by the water softener performing the regeneration may be controlled in a similar manner when it need to flow into the washing chamber, which is not described in detail herein. The water outlet of the water softener and the drain pipe of the dishwasher may communicate via a pipe. Another valve may be provided between the water outlet of the water softener and the drain pipe of the dishwasher. Thereby, the pipe connecting the water outlet of the water softener and the drain pipe of the dishwasher may be unblocked or blocked by opening or closing the other valve.

In another embodiment, the water outlet of the water softener, the washing chamber, and the drain pipe communicate in series via pipes. That is, the water outlet of the water softener and the drain pipe communicate via the washing chamber. Valves may be provided at a water inlet of the washing chamber and a water inlet of the drain pipe, or may be provided in the pipes, or may be provided at the water outlet of the water softener. Thereby, the pipe connecting the water outlet of the water softener and the washing chamber and the pipe connecting an outlet of the washing chamber and the drain pipe may be unblocked or blocked by opening or closing of the corresponding valves. Correspondingly, the pipe connecting the water outlet of the washing chamber and the drain pipe is unblocked when draining water, so that the water in the washing chamber of the dishwasher is drained through the drain pipe.

After the step S101, the method further includes a following step.

It is assumed that the hardness is greater than or equal to the first threshold hardness and smaller than second threshold hardness. The water softener is controlled to perform the softening in the water-injection phase of a third operation stage not requiring softened water, and water generated under the softening in such phase flows into the washing chamber, in a case that there is the third operation stage between the first operation stage and the second operation stage. Otherwise, the water softener is controlled to perform regeneration before the second operation stage.

In some embodiments, the above scheme may be implemented through steps S102, S104, S105, S 106, and S 107, as shown in Figure 3. The process proceeds to S 102 after the step S101, then proceeds to step S 104 in a case the determination in the step S 102 is negative, then proceeds to step S105 in a case the determination in the step S104 is positive, then proceeds to step S106 in response to the determination in the step S105 is positive, and proceeds to step S107 in response to the determination in the step S105 is negative. The step S102 may refer to the relevant part of the foregoing description.

In step S 104, it is determined whether the hardness acquired in the step S 101 is less than second threshold hardness.

In step S105, it is determined whether there is a third operation stage not requiring softened water between the first operation stage and the second operation stage.

In step S106, the water softener is controlled to further perform the softening in the water-injection phase of the third operation stage, and water generated under the further softening in such phase flows into the washing chamber.

In step S107, the water softener is controlled to perform regeneration before the second operation stage. Thereby, the softening capability of the water softener may be restored before the second operation stage, so that the water softener can provide sufficient water which meets a requirement on hardness in the second operation stage of the dishwasher.

In some embodiments, the process may proceeds to the step S107 in a case that the determination in the step S104 is negative.

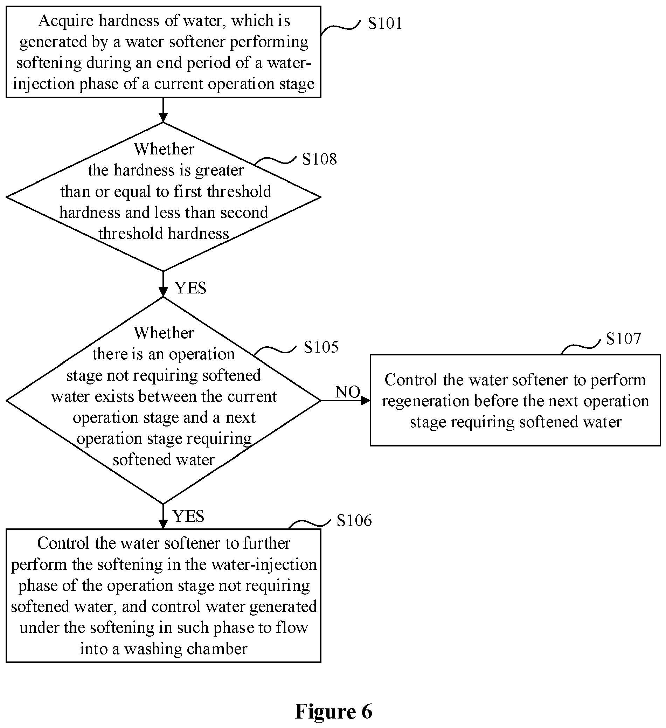

Reference is made to Figure 6. In another embodiment, the method may proceed to S108 after the step S101. In step S108, it is determined whether the hardness acquired in the step S101 is greater than or equal to the first threshold hardness and less than the second threshold hardness. The process proceeds to the step S105 and steps subsequent to the step S105, in a case that the determination in the step S108 is positive.

The second threshold hardness characterizes a rated upper limit of the hardness of water in the washing chamber during each operation stage requiring softened water. The second threshold hardness is greater than the first threshold hardness. In an embodiment, the second threshold hardness ranges from 8dh to 11dh. That is, the second threshold hardness may be set to any hardness ranging from 8dh to 11dh. A specific value of the second threshold hardness may be set based on factors such as a specific requirement of dishwasher products and the first threshold hardness, which is not limited herein.

After step S101, the method further includes a following step.

The water softener is controlled to perform regeneration before the second operation stage in a case that the hardness is greater than or equal to second threshold hardness. The second threshold hardness is greater than the first threshold hardness, and the second threshold hardness characterizes a rated upper limit of the hardness of water in the washing chamber during the operation stage requiring softened water.

Reference is made to Figure 3. In an embodiment, the method proceeds to step the S102 and then the step S104 after the step S101, and then proceeds to the step S107 in a case that the determination in the step S104 is negative. As shown in Figure 3, after the step S102 and then the step S104 are performed, a negative determination in the step S104 indicates that the hardness acquired in the step S101 is greater than or equal to the second threshold hardness, and therefore the process proceeds to the step S107.

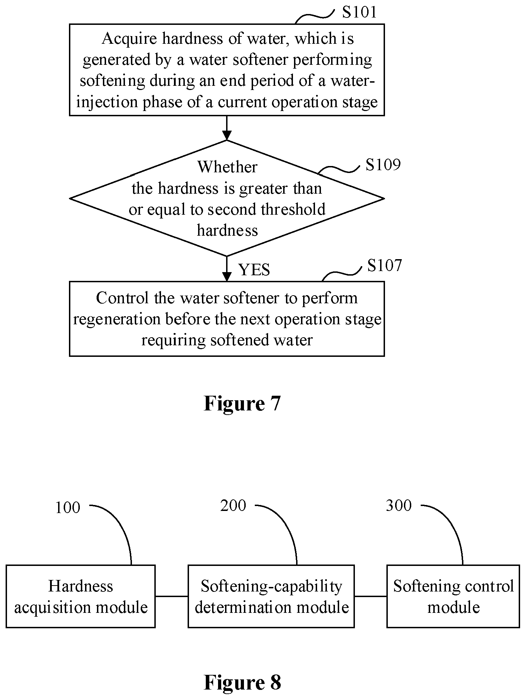

Reference is made to Figure 7. In another embodiment, the process proceeds to step S109 directly after the step S101. In step S109, it is determined whether the hardness acquired in the step S101 is greater than or equal to the second threshold hardness. The process proceeds to the step S107 in a case that the determination in the step S109 is positive. Thereby, the softening capability of the water softener may be restored before the dishwasher enters the second operation stage, so that the water softener can provide sufficient water which meets a requirement on hardness in the second operation stage of the dishwasher.

An apparatus for controlling a dishwasher is further provided according to an embodiment of the present disclosure. A single washing cycle of the dishwasher includes at least one operation stage, and each operation stage includes a water-injection phase and a washing phase. The apparatus includes a hardness acquisition module 100, a softening-capability determination module 200, and a softening control module 300.

The hardness acquisition module 100 is configured to acquire hardness of water, which is generated by a water softener performing softening during an end period of the water-injection phase of a current operation stage.

The softening-capability determination module 200 is configured to determine, in a case that the hardness is less than preset first threshold hardness, that the water softener is capable of generating water of which hardness and a volume meet a requirement of a next operation stage that requires softened water.

The softening control module 300 is configured to control the water softener to not perform the softening after the water-injection phase of the current operation stage until the next operation stage that requires softened water, and control the water softener to perform the softening again in the next operation stage that requires softened water.

The hardness acquisition module 100 detects the hardness of water which is generated by the water softener performing the softening during the end period of the water-injection phase of the current operation stage. The softening-capability determination module 200 measures the softening capability of the water softener based on the hardness. When the acquired hardness indicates that the water softener is capable to generate sufficient softened water which can support the next operation stage requiring softened water, the softening control module 300 controls the water softener to not perform the softening after the water-injection phase of the current operation stage ends until such next operation stage, and controls the water softener to perform the softening again in such next operation stage that requires softened water. Thereby, the softening capability of the water softener can be effectively utilized, the regeneration of the water softener is less frequent, and a waste of water resources caused by the regeneration is reduced.

A non-transitory computer-readable storage medium is further provided according to an embodiment of the present disclosure. The storage medium stores a computer program, and the computer program when executed by a processor implements the method for controlling the dishwasher provided according to embodiments of the present disclosure.

## Claims

1. A method for controlling a dishwasher, wherein
a single washing cycle of the dishwasher comprises at least one operation stage, each of which comprises a water-injection phase and a washing phase, and
the method comprises:
acquiring hardness of water, which is generated by a water softener performing softening during an end period of the water-injection phase of a current operation stage; and
in response to the hardness being less than a preset first threshold hardness,
controlling the water softener to not perform the softening after the water-injection phase of the current operation stage until a next operation stage requiring softened water, and
controlling the water softener to perform the softening in the next operation stage requiring softened water;
wherein the first threshold hardness is an upper limit of the hardness which indicates that a remaining softening capability of the water softener is sufficient to generate water of which both hardness and a volume meet a requirement of the next operation stage requiring softened water.

2. The method according to claim 1, wherein
the water softener comprises a plurality of first electrodes and a plurality of second electrodes, the first electrodes and the second electrodes are alternately stacked, and the first electrodes and the second electrodes are configured to connect to different polarities;
water is capable to flow through a channel, the channel is formed between each pair of a first electrode of the plurality of first electrodes and a second electrode of the plurality of second electrodes, the second electrode is adjacent to the first electrode, and a surface of one of the first electrode and the second electrode facing the channel is provided with an adsorption layer for adsorbing target cations; and
the water softener is switched between softening and regeneration through swapping the polarities connected to the plurality of first electrodes and the plurality of second electrodes, respectively.

3. The method according to claim 2, further comprising:
in response to there being at least an operation stage not requiring softened water between the current operation stage and the next operation stage requiring softened water,
controlling the water softener to be powered off and controlling tap water to flow into a washing chamber, during the water-injection phase of the operation stage not requiring softened water; or
controlling the water softener to perform the regeneration and controlling water generated under the regeneration to flow into the washing chamber, during the water-injection phase of the operation stage not requiring softened water.

4. The method according to claim 2, wherein after acquiring the hardness of water which is generated by the water softener performing the softening during the end period of the water-injection phase of the current operation stage, the method further comprises:
controlling the water softener to perform the softening and controlling water generated under the softening to flow into a washing chamber in the water-injection phase of an operation stage not requiring softened water, in response to:
the hardness being greater than or equal to the first threshold hardness and less than second threshold hardness, and
there being at least the operation stage not requiring softened water between the current operation stage and the next operation stage requiring softened water,
wherein the second threshold hardness characterizes a rated upper limit of hardness of water in the washing chamber during each operation stage requiring softened water.

5. The method according to claim 2, wherein after acquiring the hardness of water which is generated by the water softener performing the softening during the end period of the water-injection phase of the current operation stage, the method further comprises:
controlling the water softener to perform the regeneration before the next operation stage requiring softened water, in response to the hardness being greater than or equal to second threshold hardness,
wherein the second threshold hardness is greater than the first threshold hardness, and the second threshold hardness characterizes a rated upper limit of hardness of water in the washing chamber during each operation stage requiring softened water.

6. The method according to claim 1, wherein acquiring the hardness of water which is generated by the water softener performing the softening during the end period of the water-injection phase of the current operation stage comprises:
detecting total dissolved solids in the water at a water outlet of the water softener during the end period of the water-injection phase of the current operation stage;
calculating the hardness corresponding to the detected total dissolved solids based on a conversion relationship between the total dissolved solids and the hardness.

7. The method according to claim 1, wherein acquiring the hardness of water which is generated by the water softener performing the softening during the end period of the water-injection phase of the current operation stage comprises:
detecting electrical conductivity of the water at a water outlet of the water softener during the end period of the water-injection phase of the current operation stage; and
calculating the hardness corresponding to the detected electrical conductivity based on a conversion relationship between the electrical conductivity and the hardness.

8. The method according to any one of claims 1 to 7, wherein the end period of the water-injection phase of the current operation stage is latest one fifth of the water-injection phase of the current operation stage.

9. The method according to any one of claims 1 to 7, wherein the first threshold hardness ranges from 2dh to 8dh.

10. The method according to claim 4 or 5, wherein the second threshold hardness ranges from 8dh to 11dh.

11. The method according to any one of claims 1 to 10, wherein
a single washing cycle of the dishwasher comprises three operation stages which are prewash, wash, and rinse, wherein the wash is after the prewash and before the rinse;
wherein the wash and the rinse both require softened water, and washing water is heated in the wash and in the rinse.

12. An apparatus for controlling a dishwasher, wherein:
a single washing cycle of the dishwasher comprises at least one operation stage, each of which comprises a water-injection phase and a wash stage, and
the apparatus comprises:
a hardness acquisition module, configured to acquire hardness of water, which is generated by a water softener performing softening during an end period of the water-injection phase of a current operation stage;
a softening-capability determination module, configured to determine that the water softener is capable of generating water of which both hardness and a volume meet a requirement of a next operation stage requiring softened water, in response to the hardness being less than a preset first threshold hardness; and
a softening control module, configured to configured to control the water softener to not perform the softening after the water-injection phase of the current operation stage until the next operation stage requiring softened water, and control the water softener to perform the softening in the next operation stage requiring softened water.
